# EUROPÄISCHE PATENTSCHRIFT

(11) **EP 1 763 416 B1**
(45) Veröffentlichungstag und Bekanntmachung des Hinweises auf die Patenterteilung: **21.05.2008**
(21) Anmeldenummer: 04740574.1
(22) Anmeldetag: 02.07.2004
(51) Int. Cl.: B23B 37/00, B23B 31/02, B06B 1/04, B06B 1/06

(54) **SCHWINGKOPF-WERKZEUG**
TOOL WITH AN OSCILLATING HEAD
OUTIL A TETE OSCILLANTE

(43) Veröffentlichungstag der Anmeldung: 21.03.2007
(73) Patentinhaber: Sauer GmbH, 55758 Stipshausen (DE)
(72) Erfinder: SAUER, Hermann, 55758 Stipshausen (DE)
(74) Vertreter: Fuchs
(86) Internationale Anmeldenummer: PCT/EP2004/007216
(87) Internationale Veröffentlichungsnummer: WO 2006/002675

(56) Entgegenhaltungen:
- WO-A-03/061886
- US-A- 5 140 773
- US-A1- 2001 020 808
- PATENT ABSTRACTS OF JAPAN Bd. 016, Nr. 002 (M-1197), 7. Januar 1992 (1992-01-07) & JP 03 228507 A (BROTHER IND LTD), 9. Oktober 1991 (1991-10-09)
- PATENT ABSTRACTS OF JAPAN Bd. 007, Nr. 149 (M-225), 30. Juni 1983 (1983-06-30) & JP 58 059701 A (DAINI SEIKOSHA KK), 8. April 1983 (1983-04-08)

## Beschreibung

Die Erfindung betrifft ein Werkzeug mit einem Werkzeughalter und einer Spindelnase, gemäß dem Oberbegriff der Ansprüche 1 oder 8. Ein solches Werkzeug ist aus der US-A-5,140,773 bekannt.

Üblicherweise sind Werkzeugmaschinen mit einer drehbaren Spindel ausgestattet, die an ihrem Ende eine Spindelnase aufweist, in welche entsprechend des zu bearbeitenden Werkstückes und der Formvorgabe unterschiedliche Werkzeuge insbesondere Fräsköpfe eingesetzt werden können.

Für eine optimale Bearbeitung eines Werkstückes wurden in der Vergangenheit bereits Bestrebungen unternommen, maschinenseitig in der Spindel eine Schwingungseinheit anzuordnen, um den Werkzeugkopf in Schwingung zu versetzen. Der Nachteil dieser bekannten Konstruktionen liegt darin, dass alle zur Verfügung stehenden Werkzeuge auf die Schwingungseinheit abgestimmt werden müssen. Diese Vorgehensweise ist sehr aufwendig und führt häufig nicht zum Erfolg, da die Werkzeuge in eine Eigenschwingung versetzt werden, welche die Frequenz und die Amplitude aufhebt und darüber hinaus zu einer erheblichen Wärmeentwicklung führt.

Demzufolge liegt der Erfindung die Aufgabe zugrunde, ein Werkzeug bereitzustellen, das stets in einem dafür vorgesehenen Frequenzbereich besonders effektiv betrieben werden kann.

Die Aufgabe wird erfindungsgemäß mit einem Werkzeug mit einem Werkzeughalter und einer Spindelnase gemäß Anspruch 1 oder Anspruch 8 gelöst.

Hieraus resultiert der Vorteil, dass das Werkzeug nicht mehr an die maschinenseitige Schwingungseinheit angepasst werden muss. Erfindungsgemäß erhält vielmehr jedes Werkzeug einen darauf abgestimmten Schwingungsmotor, so dass die Werkzeuge standardisiert hergestellt werden können. Der Schwingungsmotor arbeitet mit einem üblichen außerhalb des Werkzeuges angeordneten Hochfrequenzgenerator zusammen. Dieser Hochfrequenzgenerator stellt eine Wechselspannung in einem Frequenzbereich zwischen 17 und 60 kHz bereit, die im Wesentlichen der Schwingfrequenz des Werkzeuges entspricht. Dabei ist eine longitudinale Wellenausbreitung von 100 µm bei einer gleichzeitigen Rotation bis zu 40 000 U/min möglich. Für unterschiedliche Anwendungen ist es auch möglich, verschiedene Schwingungsmotoren zum Abdecken verschiedener Frequenzbereiche bereitzuhalten. Neben der aktiven Werkzeuganregung kann das erfindungsgemäße Werkzeug auch als Prozess-Sensor dienen und Prozessdaten im Produktionseinsatz erfassen.

In einer ersten bevorzugten Ausführungsform versetzt der Schwingungsmotor den Werkzeughalter über ein Ferromagnetisches System in Schwingung. Bei dieser Ausführungsform wird der Werkzeughalter über ein permanent wechselndes elektromagnetisches Feld zum Schwingen angeregt, wobei der Wechsel der Polarität von der angelegten Frequenz der Wechselspannung abhängt. Eine Übertragung von elektrischer Energie auf das drehende Werkzeug ist bei dieser Ausführungsform nicht notwendig.

Das Ferromagnetische System umfasst eine ortsfest angeordnete Erregerspule und einen drehfest an dem Werkzeughalter angeordneten Ferromagnetischen Kopf. Der ferromagnetische Kopf ist aus einem ferromagnetischen Material, wie beispielsweise einer ferromagnetischen Keramik hergestellt.

Günstigerweise wirkt der Schwingungsmotor berührungslos mit der Erregerspule zusammen. Der daraus resultierende Vorteil liegt in dem besonders verschleißarmen Betrieb und der Unanfälligkeit beispielsweise gegenüber austretender Kühlflüssigkeit.

Der ferromagnetische Kopf kann in Umfangsrichtung konzentrisch von der Erregerspule umgeben sein. Hieraus resultiert ein besonders gleichmäßiges elektrisches Feld mit einer konstanten gleichmäßig intensiven Schwingung des Schwingungsmotors.

Vorzugsweise ist zwischen dem Ferromagnetischen Kopf und der Erregerspule ein Hüllrohr angeordnet, wobei das Hüllrohr vorteilhafterweise aus einem Keramik- oder Karbonfasermaterial gefertigt ist. Das Hüllrohr muss in jedem Fall aus einem nichtmagnetischen Material gefertigt sein, damit der ferromagnetische Kopf in dem elektromagnetischen Feld der Erregerspule liegt.

Das Hüllrohr kann ortsfest zu dem drehenden Werkzeug angeordnet sein oder alternativ hierzu, manschettenartig in den Werkzeughalter integriert sein. Bei der zweiten Ausführungsform ist das Halterohr integraler Bestandteil der Haltehülse und dreht sich mit dieser.

Gemäß einer zweiten bevorzugten Ausführungsform versetzt der Schwingungsmotor den Werkzeughalter über ein Piezo-System in Schwingung. In diesem Fall wird also elektrische Energie auf das drehende Werkzeug übertragen und die Schwingung werkzeugimmanent erzeugt.

Das Piezo-System umfasst eine erste feststehende Spule und eine zu dieser beabstandete an den Werkzeughalter angreifende zweite Spule, wobei die zweite Spule mit Piezo-Aktoren verbunden ist. Die Piezo-Aktoren umschließen ringartig die Werkzeugaufnahme und schwingen bei angelegter Wechselspannung beispielsweise mit einer Amplitude von 8 µm. Größere Schwingungsamplituden lassen sich dadurch erzielen, dass mehrere dieser Piezo-Aktoren übereinander angeordnet und elektrisch angeschlossen werden.

Die erste und zweite Spule sollte übereinander liegen und dabei kreisförmig den Werkzeughalter umgeben. Auch mit dieser Ausführungsform ist eine berührungslose Anregung des Schwingungsmotors möglich.

Als nicht erfindungsgemäße Alternative zu den vorstehend beschriebenen Ausführungsformen hat es sich als günstig erwiesen, wenn das Piezo-System mindestens zwei ortsfest angeordnete Kohlebürsten umfasst, die mit an dem Werkzeughalter angeordneten Schleifringen in Kontakt stehen, wobei die Schleifringe mit Piezo-Aktoren verbunden sind. Diese nicht erfindungsgemäße Ausführungsform kommt ohne elektrische Spulen aus, da die elektrische Energie über die Kohlebürsten und Schleifringe auf das Werkzeug übertragen wird und auf dem Werkzeug mittels der Piezo-Aktoren in eine Schwingung umgesetzt wird.

In allen Ausführungsformen ist es von Vorteil, den Werkzeughalter mit einem in axialer Richtung verlaufenden Kühlmittelkanal auszubilden. Diese Ausgestaltung erlaubt nicht nur eine Kühlung des Werkzeugkopfes, sondern auch des Schwingungsmotors.

Die Erfindung wird nachfolgend anhand von insgesamt vier Zeichnungsfiguren näher erläutert. Es zeigen die:
- **Fig. 1:**: einen Querschnitt durch einen in eine Spindelnase eingesetzten Werkzeughalter gemäß einer ersten Ausführungsform mit einem ferromagnetischen System;
- **Fig. 2:**: einen Querschnitt durch ein Werkzeug gemäß einer zweiten Ausführungsform mit einem ferromagnetischen System;
- **Fig. 3:**: einen Querschnitt durch einen in eine Spindelnase eingesetzten Werkzeughalter gemäß einer dritten Ausführungsform mit einem Piezo-System;
- **Fig. 4:**: einen Querschnitt durch einen in eine Spindelnase eingesetzten Werkzeughalter gemäß einer vierten, nicht erfindungsgemäße Ausführungsform mit einem Piezo-System.

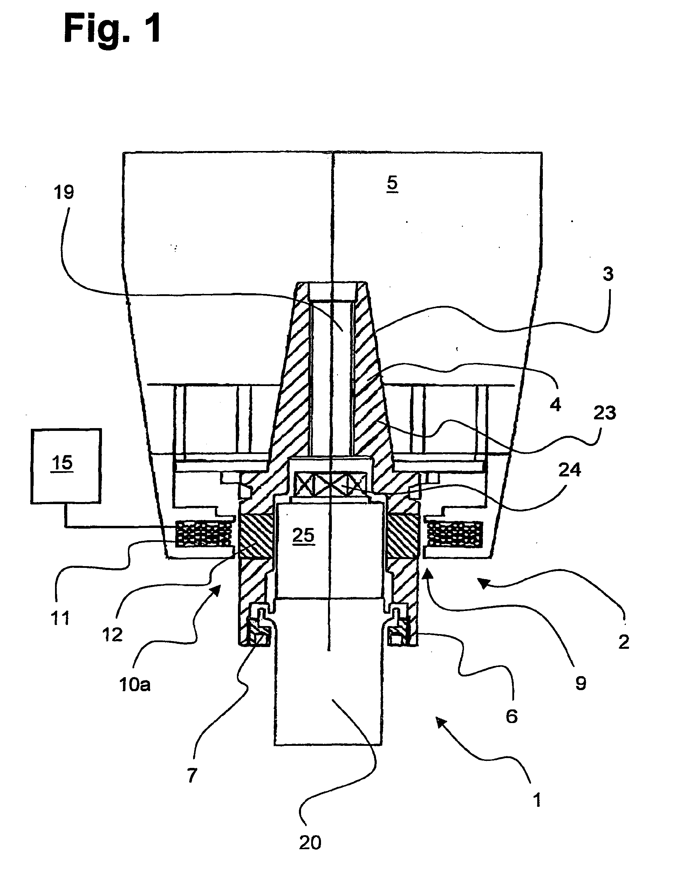

In der Fig. 1 ist in einem Querschnitt ein Werkzeughalter 2 in einer ersten Ausführungsform dargestellt, der mit seiner kegelförmigen, an dem oberen Ende 3 angeordneten Werkzeughalteraufnahme 4 in eine komplementär ausgebildete Spindelnase 5 einer nicht weiter gezeigten Werkzeugmaschine eingesteckt und gegen Mitdrehen gesichert ist.

Der Werkzeughalter 2 ist zweiteilig aufgebaut und umfasst ein Trägerelement 23 und eine aus dem Trägerelement 23 herauslaufende, mit einer Mutter 24 gehaltene Spindel-Hauptwelle 20. Die Drehmomentübertragung verläuft von der Spindelnase 5 auf die Werkzeughalteraufnahme 4, die integraler Bestandteil des Trägerelementes 23 ist, und von dieser auf die Spindel-Hauptwelle 20.

Die Spindel-Hauptwelle 20 ist zusätzlich in einer Werkzeugaufnahme 7 des Trägerelementes 23 gelagert, wobei diese Lagerung als Labyrinthlagerung ein Schwingen der Spindel-Hauptwelle 20 in axialer Richtung zulässt.

Auf der Spindelhauptwelle 20 befindet sich ein Ferromagnetischer Kopf 25, der von einem in das Trägerelement 23 des Werkzeughalters 2 eingesetzten Hüllrohr 12 umgeben ist. Bei dieser Ausführungsform dreht sich das Hüllrohr 12 zusammen mit dem ferromagnetischen Kopf 25 und der Spindel-Hauptwelle 20.

Der Werkzeughalter 2 ist radial beabstandet von einer ortsfest angeordneten Erregerspule 11 umgeben, über welche ein elektrisches Feld aufgebaut werden kann. Die Erregerspule 11 wird von einem Hochfrequenz-Generator 15 mit einer Wechselspannung beaufschlagt, woraus sich ein pulsierendes elektromagnetisches Feld mit alternierendem Vorzeichen ergibt. Das elektromagnetische Feld setzt den ferromagnetischen Kopf 25 und die damit verbundene Spindel-Hauptwelle 20 mit dem daran befindlichen, in der Fig. 1 nicht gezeigten, Werkzeugkopf 8 in Schwingung. Der ferromagnetische Kopf 25 und die Erregerspule 11 bilden zusammen ein ferromagnetisches System 10a eines Schwingungsmotors 9.

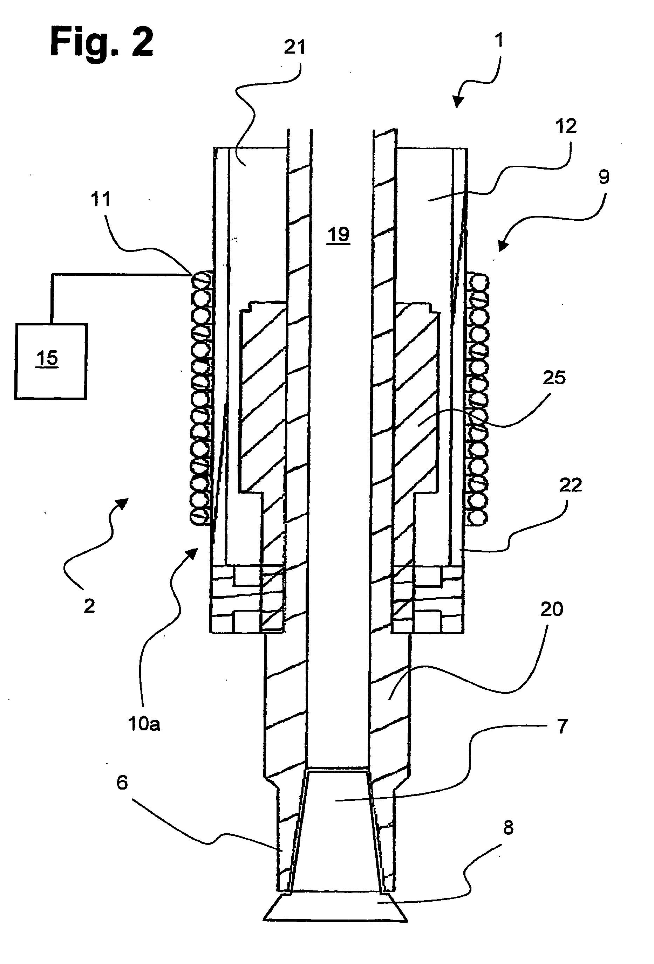

Die Kühlmittelversorgung des in Fig. 2 gezeigten Werkzeugkopfes 8 erfolgt über die Spindelnase 5 in einen durch das Trägerelement 23 verlaufenden Kühlmittelkanal 19 und die hohle Spindel-Hauptwelle 20. Auch hier wird das Kühlmittel durch den Werkzeughalter 2 hindurch geleitet.

Die Fig. 2 zeigt in einem Querschnitt ein Werkzeug 1 gemäß einer zweiten Ausführungsform. Das Werkzeug 1 umfasst den Werkzeughalter 2, der an seinem unteren Ende 6 als Werkzeugaufnahme 7 eine kegelartig zulaufende Gewindebohrung aufweist. In der Werkzeugaufnahme 7 ist ein mit einem ebenfalls kegelartigen Gewinde versehener Werkzeugkopf 8 eingeschraubt.

Der Werkzeughalter 2 besteht zunächst aus der mittig angeordneten Spindel-Hauptwelle 20, die sich rohrförmig von der in der Fig. 2 nicht erkennbaren Spindelnase 5 zu dem endseitig montierten Werkzeugkopf 8 erstreckt. Die Spindel-Hauptwelle 20 überträgt das Drehmoment der Werkzeugmaschine auf den Werkzeugkopf 8 und sorgt darüber hinaus für eine stetige Kühlmittelversorgung des Werkzeugkopfes 8. Hierfür ist die Spindel-Hauptwelle 20 rohrförmig mit dem Kühlmittelkanal 19 ausgebildet.

Auf der Spindel-Hauptwelle 20 sitzt drehfest der ferromagnetische Kopf 25. Als Verdrehsicherung kommen bekannte Welle-Nabe-Verbindungen zum Einsatz.

Der ferromagnetische Kopf 25 ist Bestandteil des ferromagnetischen Systems 10 a, welches außerdem die ortsfest angeordnete Erregerspule 11 umfasst.
Die Erregerspule 11 ist koaxial um den ferromagnetischen Kopf 25 angeordnet, wobei die axiale Ausrichtung der Erregerspule 11 mit der axialen Ausrichtung des ferromagnetischen Kopfes 25 übereinstimmt.

Von dem ferromagnetischen Kopf 25 mechanisch entkoppelt umgibt diesen ein aus Karbonfasern gefertigtes feststehendes Hüllrohr 12. Dieses Hüllrohr 12 sorgt in erster Linie für eine elektrische Trennung des Schwingungsmotors 9 von der Erregerspule 11.

Das Hüllrohr 12 umgibt den ferromagnetischen Kopf 25 in Umfangsrichtung vollständig und ist an seinem oberen Ende 21 und seinem unteren Ende 22 geöffnet. Während des Betriebes der Werkzeugmaschine tritt Kühlmittel an verschiedenen Stellen aus und wird demzufolge nicht nur durch den Kühlmittelkanal 19 an den Werkzeugkopf 8 herangeführt, sondern läuft auch außerhalb an der Außenwand der Spindel-Hauptwelle 20 hinunter. Aufgrund der offenen konstruktiven Ausgestaltung des Hüllrohres 12 wird ein Anstauen von Kühlmittel in dem Ringraum zwischen der Spindel-Hauptwelle 20 beziehungsweise dem ferromagnetischen Kopf 25 und dem Hüllrohr 12 vermieden.

Die axiale Länge des Hüllrohres 12 ist deutlich länger ausgeführt, als die axiale Erstreckung des ferromagnetischen Kopfes 25 oder der ortsfest angeordneten Erregerspule 11. Hierdurch wird vermieden, dass es aufgrund von spritzendem Kühlmittel zu einem Kurzschluss zwischen der Erregerspule 11 und dem ferromagnetischen Kopf 25 kommt.

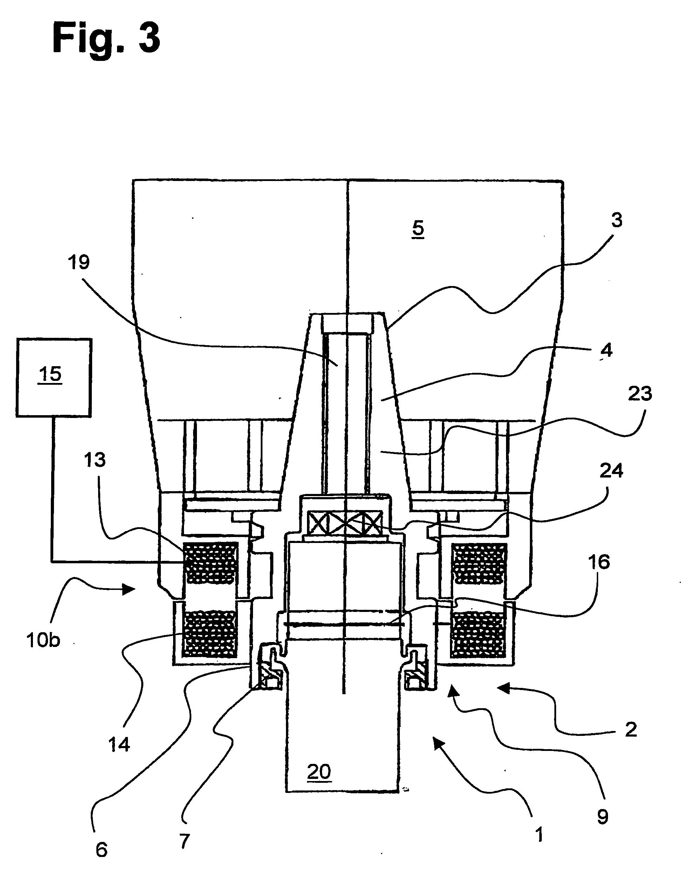

Eine dritte alternative Ausführungsform gibt Fig. 3 wieder, bei der die Schwingung des Werkzeuges 1 über ein Piezo-System 10b als Schwingungsmotor 9 realisiert wird. Die wesentlichen Komponenten des Piezo-Systems 10b sind eine erste und zweite Spule 13, 14 und auf dem Werkzeughalter befindliche Piezo-Aktoren 16. Der Werkzeughalter 2 ist auch hier über die Werkzeughalteraufnahme 4 drehfest mit der Spindelnase 5 verbunden.

Der Aufbau des Werkzeughalters 2 ist nicht zweiteilig, sondern dreiteilig ausgeführt. Zusätzlich zu den Bauteilen Trägerelement 23 und Spindel-Hauptwelle 20 weist die Ausführungsform gemäß der Fig. 3 die mit dem Trägerelement 23 fest verbundene zweite Spule 14 auf.

Zwischen der Spindelnase 5 und der zweiten Spule 14 ist die erste feststehende Spule 13 angeordnet. Diese erste Spule 13 ist über Verbindungsleitungen mit dem außerhalb des Werkzeuges 1 angeordneten Hochfrequenz-Generator 15 verbunden und wird von diesem mit einer hochfrequenten Spannung versorgt.

Die zweite Spule 14 umgibt den Werkzeughalter 2 vollständig in seiner Umfangsrichtung und ist mit zwei übereinander auf dem Werkzeughalter 2 angeordneten Piezo-Aktoren 16 verbunden. Dabei befindet sich die zweite Spule 14 in axialer Richtung in Höhe der Piezo-Aktoren 16. Beide Spulen 13, 14 sind gegenüber dem Werkzeughalter 2 im Wesentlichen baulich abgegrenzt.

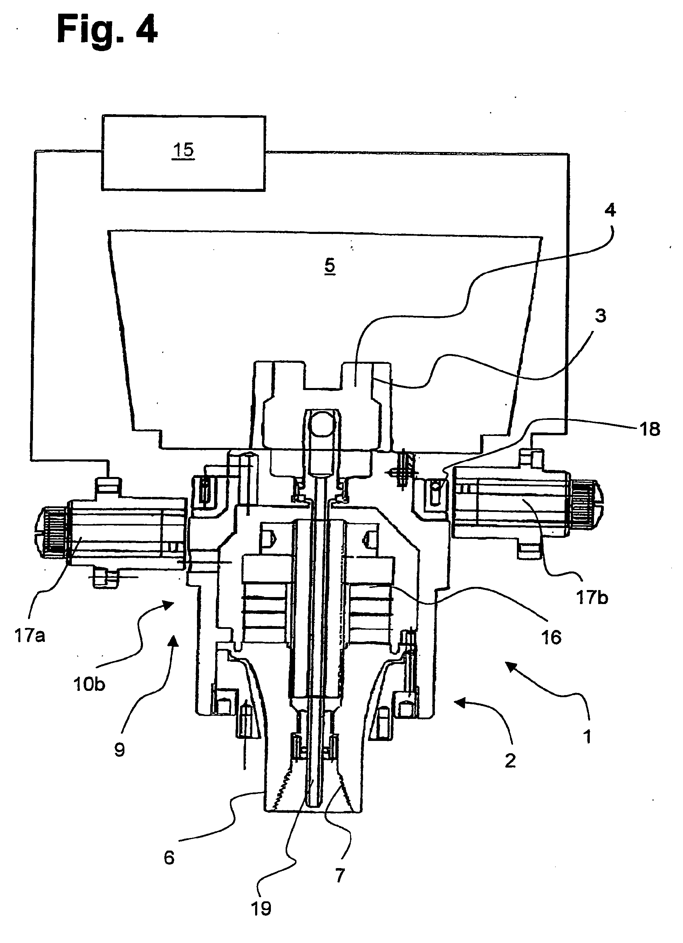

Eine vierte, nicht erfindungsgemäße, alternative Ausführungsform ist ebenfalls basierend auf einem Piezo-System 10b in Fig. 4 gezeigt. Abweichend von den vorstehend beschriebenen Ausführungsformen wird hier die elektrische Versorgung des Werkzeughalters 2 nicht berührungslos, sondern über zwei Kabelbürsten 17a, 17b und an dem Werkzeughalter 2 befindliche Schleifringe 18 realisiert.

Die Kabelbürsten 17a, 17b sind an gegenüberliegenden Seiten des Werkzeughalters 2 angeordnet, wobei die erste Kohlebürste 17a mit einem Spannungsausgang und die zweite Kohlebürste 17b an einem Masseanschluss des Hochfrequenz-Generators 15 verbunden ist. Die jeweilige Kabelbürste 17a, 17b steht mit jeweils einem Schleifring 18 in Kontakt, wobei die beiden Schleifringe 18 elektrisch voneinander getrennten sind.

Die Schleifringe 18 umgeben den Werkzeughalter 2 in seiner Umfangsrichtung vollständig und sind mit vier übereinander angeordneten Piezo-Aktoren 16 verbunden. Diese wiederum geben die Frequenz des Schwingungsmotors 9 vor.

An dem zweiten Ende 6 des Werkzeughalters 2 ist eine kegelartige Bohrung als Werkzeugaufnahme 7 zu erkennen. Die Werkzeugaufnahme 7 steht in Verbindung mit einem den Werkzeughalter 2 in axialer Richtung vollständig durchlaufenden Kühlmittelkanal 19.

### Bezugszeichenliste

- 1: Werkzeug
- 2: Werkzeughalter
- 3: erstes/oberes Ende Werkzeughalter
- 4: Werkzeughalteraufnahme
- 5: Spindelnase
- 6: zweites/unteres Ende Werkzeughalter
- 7: Werkzeugaufnahme
- 8: Werkzeugkopf
- 9: Schwingungsmotor
- 10a: ferromagnetisches System
- 10b: Piezo-System
- 11: ortsfest angeordnete Erregerspule
- 12: Hüllrohr
- 13: erste feststehende Spule
- 14: zweite Spule
- 15: Hochfrequenz-Generator
- 16: Piezo-Aktoren
- 17a: erste Kohlebürste
- 17b: zweite Kohlebürste
- 18: Schleifring
- 19: Kühlmittelkanal
- 20: Spindel-Hauptwelle
- 21: oberes Ende Hüllrohr
- 22: unteres Ende Hüllrohr
- 23: Trägerelement
- 24: Mutter
- 25: ferromagnetischer Kopf

## Patentansprüche

1. Werkzeug (1) mit einem Werkzeughalter (2) und einer Spindelnase (5), wobei der Werkzeughalter (2) an einem ersten Ende (3) eine Werkzeughalteraufnahme (4) zum Adaptieren an die drehbare Spindelnase (5), und an einem zweiten Ende (6) eine Werkzeugaufnahme (7) aufweist, und mit einem in die Werkzeugaufnahme (7) einsetzbaren Werkzeugkopf (8), wobei der Werkzeughalter (2) und die Spindelnase (5) einen Schwingungsmotor (9) bilden,
**dadurch gekennzeichnet,**
**dass** der Schwingungsmotor (9) den Werkzeughalter (2) über ein ferromagnetisches System (10a) in Schwingung versetzt und das ferromagnetische System (10a) eine ortsfest angeordnete Erregerspule (11) und einen drehfest an dem Werkzeughalter (2) angeordneten ferromagnetischen Kopf (25) umfasst.

2. Werkzeug nach Anspruch 1, **dadurch gekennzeichnet, dass** der ferromagnetische Kopf (25) berührungslos mit der Erregerspule (11) zusammenwirkt.

3. Werkzeug nach Anspruch 1 oder 2, **dadurch gekennzeichnet, dass** der ferromagnetische Kopf (25) in Umfangsrichtung konzentrisch von der Erregerspule (11) umgeben ist.

4. Werkzeug nach einem der Ansprüche 1 bis 3, **dadurch gekennzeichnet, dass** zwischen dem ferromagnetischen Kopf (25) und der Erregerspule (11) ein Hüllrohr (12) angeordnet ist.

5. Werkzeug nach Anspruch 4, **dadurch gekennzeichnet, dass** das Hüllrohr (12) aus einem nichtmagnetischen Material gefertigt ist.

6. Werkzeug nach Anspruch 4 oder 5, **dadurch gekennzeichnet, dass** das Hüllrohr (12) ortsfest angeordnet ist. (Variante 1)

7. Werkzeug nach Anspruch 4 oder 5, **dadurch gekennzeichnet, dass** das Hüllrohr (12) in den Werkzeughalter (2) integriert ist. (Variante 2)

8. Werkzeug (1) mit einem Werkzeughalter (2) und einer Spindelnase (5), wobei der Werkzeughalter (2) an einem ersten Ende (3) eine Werkzeughalteraufnahme (4) zum Adaptieren an die drehbare Spindelnase (5), und an einem zweiten Ende (6) eine Werkzeugaufnahme (7) aufweist, und mit einem in die Werkzeugaufnahme (7) einsetzbaren Werkzeugkopf (8), wobei der Werkzeughalter (2) und die Spindelnase (5) einen Schwingungsmotor (9) bilden,
**dadurch gekennzeichnet,**
**dass** der Schwingungsmotor (9) den Werkzeughalter (2) über ein Piezo-System (10b) in Schwingung versetzt und das Piezo-System (10b) eine erste feststehende Spule (13) und eine zu dieser beabstandete an den Werkzeughalter (2) angreifende zweite Spule (14) umfasst, wobei die zweite Spule (14) mit Piezo-Aktoren (16) verbunden ist. (Fig. 3)

9. Werkzeug nach Anspruch 8, **dadurch gekennzeichnet, dass** die erste und zweite Spule (13, 14) kreisförmig den Werkzeughalter (2) umgeben.

10. Werkzeug nach Anspruch 8 oder 9, **dadurch gekennzeichnet, dass** die erste und zweite Spule (13, 14) übereinander liegen.

11. Werkzeug nach einem der Ansprüche 1 bis 10, **dadurch gekennzeichnet, dass** die Spule (11,13) an einen Hochfrequenz-Generator (15) angeschlossen ist.

12. Werkzeug nach einem der Ansprüche 1 bis 11, **dadurch gekennzeichnet, dass** der Werkzeughalter (2) einen in axialer Richtung verlaufenden Kühlmittelkanal (19) aufweist.

## Claims

1. A tool (1) with a tool holder (2) and a spindle nose (5), wherein the tool holder (2) has at a first end (3) a tool-holder carrier (4) for adaptation to the rotatable spindle nose (5) and at a second end (6) has a tool carrier (7), and with a tool head (8) which is insertable into the tool carrier (7), wherein the tool holder (2) and the spindle nose (5) form an oscillating motor (9), **characterised in that** the oscillating motor (9) sets the tool holder (2) into oscillation via a ferromagnetic system (10a), and the ferromagnetic system (10a) comprises a fixedly arranged excitation coil (11) and a ferromagnetic head (25) which is arranged in a rotationally fixed manner on the tool holder (2).

2. A tool according to claim 1, **characterised in that** the ferromagnetic head (25) interacts in a contactless manner with the excitation coil (11).

3. A tool according to claim 1 or 2, **characterised in that** the ferromagnetic head (25) is surrounded concentrically by the excitation coil (11) in a circumferential direction.

4. A tool according to any one of claims 1 to 3, **characterised in that** a casing tube (12) is arranged between the ferromagnetic head (25) and the excitation coil (11).

5. A tool according to claim 4, **characterised in that** the casing tube (12) is manufactured from a non-magnetic material.

6. A tool according to claim 4 or 5, **characterised in that** the casing tube (12) is fixedly arranged. (Variant 1)

7. A tool according to claim 4 or 5, **characterised in that** the casing tube (12) is integrated into the tool holder (2). (Variant 2)

8. A tool (1) with a tool holder (2) and a spindle nose (5), wherein the tool holder (2) has at a first end (3) a tool-holder carrier (4) for adaptation to the rotatable spindle nose (5) and at a second end (6) has a tool carrier (7), and with a tool head (8) which is insertable into the tool carrier (7), wherein the tool holder (2) and the spindle nose (5) form an oscillating motor (9), **characterised in that** the oscillating motor (9) sets the tool holder (2) into oscillation via a piezo system (10b), and the piezo system (10b) comprises a first, stationary coil (13) and a second coil (14) which is spaced apart therefrom and acts on the tool holder (2), wherein the second coil (14) is connected to piezo actuators (16). (Fig. 3)

9. A tool according to claim 8, **characterised in that** the first and the second coil (13, 14) surround the tool holder (2) in a circular manner.

10. A tool according to claim 8 or 9, **characterised in that** the first and the second coil (13, 14) lie one above the other.

11. A tool according to any one of claims 1 to 10, **characterised in that** the coil (11, 13) is connected to a high-frequency generator (15).

12. A tool according to any one of claims 1 to 11, **characterised in that** the tool holder (2) has a coolant channel (19) extending in an axial direction.

## Revendications

1. Outil (1) comportant un porte-outil (2) et une extrémité de broche (5), le porte-outil (2) présentant à une première extrémité (3) un logement de porte-outil (4) destiné à être adapté à l'extrémité de broche rotative (5) et à une seconde extrémité (6) un logement d'outil (7), et comportant une tête d'outil (8) insérable dans le logement d'outil (7), le porte-outil (2) et l'extrémité de broche (5) formant un moteur d'oscillation (9),
**caractérisé en ce**
**que** le moteur d'oscillation (9) fait osciller le porte-outil (2) par un système ferromagnétique (10a) et le système ferromagnétique (10a) comprend une bobine d'excitation (11) disposée en une position fixe et une tête ferromagnétique (25) disposée de manière fixe en rotation au niveau du porte-outil (2).

2. Outil selon la revendication 1, **caractérisé en ce que** la tête ferromagnétique (25) interagit sans contact avec la bobine d'excitation (11).

3. Outil selon la revendication 1 ou 2, **caractérisé en ce que** la tête ferromagnétique (25) est entourée concentriquement, dans le sens circonférentiel, par la bobine d'excitation (11).

4. Outil selon l'une quelconque des revendications 1 à 3, **caractérisé en ce qu'**entre la tête ferromagnétique (25) et la bobine d'excitation (11) est disposée une gaine tubulaire (12).

5. Outil selon la revendication 4, **caractérisé en ce que** la gaine tubulaire (12) est fabriquée en un matériau non magnétique.

6. Outil selon la revendication 4 ou 5, **caractérisé en ce que** la gaine tubulaire (12) est disposée en une position fixe. (Variante 1)

7. Outil selon la revendication 4 ou 5, **caractérisé en ce que** la gaine tubulaire (12) est intégrée dans le porte-outil (2). (Variante 2)

8. Outil (1) comportant un porte-outil (2) et une extrémité de broche (5), le porte-outil (2) présentant à une première extrémité (3) un logement de porte-outil (4) destiné à être adapté à l'extrémité de broche rotative (5) et à une seconde extrémité (6) un logement d'outil (7), et comportant une tête d'outil (8) insérable dans le logement d'outil (7), le porte-outil (2) et l'extrémité de broche (5) formant un moteur d'oscillation (9),
**caractérisé en ce**
**que** le moteur d'oscillation (9) fait osciller le porte-outil (2) par un système piézo-électrique (10b) et le système piézo-électrique (10b) comprend une première bobine fixe (13) et une seconde bobine (14) espacée de celle-ci et en prise au niveau du porte-outil (2), la seconde bobine (14) étant reliée à des actionneurs piézoélectriques (16). (Figure 3)

9. Outil selon la revendication 8, **caractérisé en ce que** la première et la seconde bobine (13, 14) entourent de manière circulaire le porte-outil (2).

10. Outil selon la revendication 8 ou 9, **caractérisé en ce que** la première et la seconde bobine (13, 14) reposent l'une sur l'autre.

11. Outil selon l'une quelconque des revendications 1 à 10, **caractérisé en ce que** la bobine (11, 13) est raccordée à un générateur haute fréquence (15).

12. Outil selon l'une quelconque des revendications 1 à 11, **caractérisé en ce que** le porte-outil (2) présente un canal réfrigérant (19) s'étendant dans le sens axial.
